# EUROPEAN PATENT SPECIFICATION

(11) **EP 3 720 646 B1**
(45) Date of publication and mention of the grant of the patent: **08.09.2021**
(21) Application number: 18811834.3
(22) Date of filing: 05.12.2018
(51) Int. Cl.: B23K 31/12, B23K 26/03, B23K 26/38

(54) **DEVICE FOR MONITORING BEAM TREATMENT OF A WORKPIECE AND USE THEREOF, DEVICE FOR BEAM TREATMENT OF A WORKPIECE AND USE THEREOF, METHOD FOR MONITORING BEAM TREATMENT OF A WORKPIECE, METHOD FOR BEAM TREATMENT OF A WORKPIECE**
VORRICHTUNG ZUR ÜBERWACHUNG DER STRAHLBEHANDLUNG EINES WERKSTÜCKS UND VERWENDUNG DAVON, VORRICHTUNG ZUR STRAHLBEHANDLUNG EINES WERKSTÜCKS UND VERWENDUNG DAVON, VERFAHREN ZUR ÜBERWACHUNG DER STRAHLBEHANDLUNG EINES WERKSTÜCKS, VERFAHREN ZUR STRAHLBEHANDLUNG EINES WERKSTÜCKS
DISPOSITIF PERMETTANT DE SURVEILLER UN TRAITEMENT PAR FAISCEAU D'UNE PIÈCE À TRAVAILLER ET SON UTILISATION, DISPOSITIF DE TRAITEMENT PAR FAISCEAU D'UNE PIÈCE À TRAVAILLER ET SON UTILISATION, PROCÉDÉ PERMETTANT DE SURVEILLER UN TRAITEMENT PAR FAISCEAU D'UNE PIÈCE À TRAVAILLER, PROCÉDÉ DE TRAITEMENT PAR FAISCEAU D'UNE PIÈCE À TRAVAILLER

(30) Priority: 07.12.2017 WO PCT/EP2017/081901
(43) Date of publication of application: 14.10.2020
(73) Proprietor: Bystronic Laser AG, 3362 Niederönz (CH)
(72) Inventor: LUEDI, Andreas, 3400 Burgdorf (CH)
(74) Representative: Patentanwälte Geyer, Fehners & Partner mbB
(86) International application number: PCT/EP2018/083611
(87) International publication number: WO 2019/110648

(56) References cited:
- EP-A1- 2 886 239
- DE-A1-102011 003 717
- DE-B4-102009 050 784
- JP-A- 2016 135 492

## Description

The present invention is directed to a device for monitoring beam treatment of a workpiece and a use thereof, a device for beam treatment of a workpiece and a use thereof, a method for monitoring beam treatment of a workpiece, and a method for beam treatment of a workpiece.

A main demand on beam treatment of workpieces, such as laser beam cutting, is to improve the quality of the treated workpieces, in order to avoid e.g. rough cutting edges, burring, and slag formation. In addition, autonomous treatment machines and autonomous treatment processes are useful for saving personnel expenditure. Therefore, there is a need for devices and methods which allow control and regulation of beam treatment of workpieces.

DE102009050784B4, which is the starting point for the invention, discloses a method for image-based regulation of machining processes by providing a machining beam under application of spatially resolved detectors and of illumination sources. Images of varying illumination are combined for evaluation. A disadvantage is that all images are jointly evaluated which may lead to a slow generation of results. Further this kind of evaluation requires complex algorithms for performing the image analysis.

EP2886239A1 discloses a method for monitoring and controlling the processing path in a laser joining process, particularly in hybrid laser-arc welding. In this process a processing laser beam is directed through a processing optics system onto a surface of workpieces to be joined and guided along a butt joint of the workpieces by motion of the workpieces or the processing optics system on the processing path. An area of the surface is illuminated coaxially with the processing laser beam homogenously with illumination radiation and illumination radiation reflected from the area through least a part of the processing optics is detected and evaluated spatially resolved with an image sensor. Further, a position of the butt joint and a position of a capillary induced by the processing laser beam are determined from the images obtained from the image sensor by means of texture-based image processing, and the processing path of the processing laser beam is controlled as a function of the respectively detected positions of the butt joint and the capillary.

The task of the invention is to provide a device and a method for improved monitoring of beam treatment of a workpiece, in particular laser beam cutting. It may be a further task of the present invention to provide a device and a method for improved monitoring of beam treatment of a workpiece by which an autonomous beam treatment and a high quality of the treated workpiece can be realized.

These tasks are achieved by a device for monitoring beam treatment of a workpiece according to claim 1, a device for beam treatment of a workpiece according to claim 9, a use according to claim 12, a use according to claim 13, a method for monitoring beam treatment of a workpiece according to claim 14, and a method for beam treatment of a workpiece according to claim 21.

According to the present invention, a device for monitoring beam treatment of a workpiece, in particular laser beam treatment, is provided, including at least one illuminating device for illuminating a treatment region of the workpiece during a plurality of first time intervals, the first time intervals being separated from each other by second time intervals during which the treatment region is not illuminated by the illumination device; a detecting device for detecting an electromagnetic radiation emanating from the treatment region; and a processing device for separate processing of the electromagnetic radiation detected within the first time intervals and of the electromagnetic radiation detected within the second time intervals; wherein the detecting device is adapted to detect the electromagnetic radiation by providing a video stream with a plurality of frames at a frame rate, the frames including images of the electromagnetic radiation, the first and the second time intervals being synchronized with the frame rate.

Monitoring a beam treatment using the device of above embodiment allows an on-line and/or real-time observation, automatic control and/or feedback control of the beam treatment process. Thereby, autonomous beam treatment machines and autonomous beam treatment processes can be realized, in order to save time and personnel expenditure. In addition, due to the separate processing of the electromagnetic radiation detected within the first and the second time intervals, different types of detection results illustrating the treatment region can be obtained. For instance, on the one hand within the first time intervals the illuminated treatment region can be detected during treatment, presenting a first type of detection results. On the other hand, within the second time intervals a second type of detection results reflecting just the electromagnetic radiation emitted by the workpiece itself during treatment, e.g. a glow of a heated and/or molten material produced at the treatment region, can be observed without additional illumination. Thus, a plurality of detection results of the same type can be combined for evaluation, allowing continuous or discontinuous observation of the treatment region over a long time period of beam treatment.

Since the first and the second time intervals are synchronized with the frame rate, a straightforward separation of frames taken within the first time intervals from frames taken within the second time intervals is allowed. Moreover, a combination of frames detected within the first time intervals solely shows the illuminated treatment region, whereas a separate combination of frames detected within the second time intervals provides a plurality of frames illustrating just the electromagnetic radiation emitted by the workpiece itself during treatment. Thus, frames of the same illumination scenario can be combined for evaluation.

In some embodiments, the detecting device can be adapted to record the detected electromagnetic radiation by providing the video stream. Thereby, the recorded video stream, i.e. the video stream showing the detected and recorded electromagnetic radiation, and/or any combination of the frames included therein can be used for storing information on treatment processes and for comparison thereof.

According to the invention, the processing device is adapted to provide a first stream of frames including images of the electromagnetic radiation detected within the first time intervals and a second stream of frames including images of the electromagnetic radiation detected within the second time intervals. Thereby, two separately and/or differently processed streams of frames can be obtained, each showing the detected electromagnetic radiation and the treatment region. Processing using the invention cuts down the time required for the subsequent analysis of monitoring data as first and second streams may be analyzed in parallel.

The processing device is adapted to provide the first and the second streams of frames by processing the video stream provided by the detecting device. For instance, the processing device can select some or all of the frames detected within the first time intervals out of the video stream and combine them to result in one stream of frames. The same holds for the frames detected within the second time intervals. Moreover, the frames detected within the same type of time intervals can be combined directly or after further processing. Further, the processing device may be adapted to provide the first and the second streams of frames by processing the recorded video stream provided by the detecting device.

According to further embodiments, a filtering device can be arranged between the detecting device and the treatment region, the filtering device being adapted or adaptable to selectively pass electromagnetic radiation within a wavelength range emitted by the illumination device and reflected by the treatment region. This allows to predominantly or selectively detect the treatment region as illuminated by the illumination device(s), since the electromagnetic radiation reflected by the treatment region and arriving at the detecting device can be filtered to be more intense than the electromagnetic radiation emitted by the workpiece itself during treatment.

In some embodiments, the device for monitoring beam treatment of a workpiece may have a central axis, and at least one of the at least one illuminating device, the detecting device and the filtering device may be arranged coaxially with the central axis and/or may be formed axially symmetric. Thereby, an axial or coaxial symmetry of one or more components of the device for monitoring beam treatment can be realized. This further allows a combination or integral arrangement of the device for monitoring with an axially symmetric beam treatment device, e.g. including a laser beam source. In addition, in case of coaxially arranged illuminating device(s), the treatment region can be illuminated homogeneously.

Moreover, the detecting device can include an array of photodiodes, an array of photosensitive elements, and/or a video camera. Further, the detecting device can be adapted to provide a selectable and/or varying exposure time for at least a part of the images.

According to embodiments, the at least one illuminating device can be adapted to emit electromagnetic radiation in a wavelength range of 200 to 900 nm, preferably in a range of 300 to 850 nm, more preferably in a range of 380 to 820 nm. In addition or alternatively, the at least one illuminating device can be configured for homogeneous illumination of the treatment region. The device for monitoring beam treatment may include an amplification device for amplification of at least a part of the electromagnetic radiation emanating from the treatment region and detected at least within the first time intervals and/or within the second time intervals. For example, the detecting device may include the amplification device which provides electronic amplification of the detected electromagnetic radiation. According to other examples, the amplification may be selective.

The present invention is also directed to a device for beam treatment of a workpiece, in particular for laser beam treatment, including a beam source for beam treatment of the workpiece and a device for monitoring beam treatment according to any of claims 1-8.

According to embodiments, the device for beam treatment and the device for monitoring beam treatment may each have a central axis, and may be arranged coaxially with each other. This allows space-saving configurations of both devices.

In other embodiments, the device for beam treatment of a workpiece can include a dichroitic mirror arranged between the detecting device and the treatment region, the dichroitic mirror deflecting the treatment beam or at least a part of the electromagnetic radiation emanating from the treatment region. This allows for instance a configuration of the device for beam treatment, in which the beam source is not arranged coaxially with respect to a central axis of the device for beam treatment, due to the deflection of the treatment beam at the dichroitic mirror. In addition, by these embodiments a detection of electromagnetic radiation originating from the treatment beam can be avoided.

According to the invention, the use of a device for monitoring beam treatment of a workpiece according to any of claims 1-8 for monitoring laser beam cutting is provided. Moreover, the invention is also directed to the use of device for beam treatment according to any of claims 9-11 for laser beam cutting. Thereby, the quality of the cut workpieces can be improved, in order to avoid e.g. rough cutting edges, burring, and slag formation.

The invention also provides a method for monitoring beam treatment of a workpiece according to claim 14.

In a modification of the method according to the invention, the detected electromagnetic radiation can be recorded by providing the video stream. Thereby, the recorded video stream and/or any combination of the frames included therein can be used for storing information on treatment processes and for comparison thereof.

The first and the second time intervals can be synchronized with the frame rate such that the first and the second time intervals each correspond to the time duration of one or more of the frames. For instance, the time duration for detecting one frame can be less than 1/frame rate.

According to the method for monitoring beam treatment of a workpiece according to the invention, the separate processing provides a first stream of frames of the electromagnetic radiation detected within the first time intervals and a second stream of frames of the electromagnetic radiation detected within the second time intervals. Moreover, the first and the second streams of frames can be obtained by processing the video stream provided by the detecting.

In some embodiments of the method for monitoring beam treatment of a workpiece, the electromagnetic radiation emanating from the treatment region can be filtered before being detected to selectively pass electromagnetic radiation within a wavelength range emitted by the illumination device and reflected by the treatment region.

Moreover, according to embodiments of the method for monitoring beam treatment of a workpiece, the treatment region may be illuminated using electromagnetic radiation in a wavelength range of 200 to 900 nm, preferably in a range of 300 to 850 nm, more preferably in a range of 380 to 820 nm and/or may be homogeneously illuminated.

According to some embodiments of the method for monitoring beam treatment of a workpiece, at least a part of the electromagnetic radiation emanating from the treatment region and detected at least within the first time intervals and/or within the second time intervals can be amplified.

In the method for monitoring beam treatment of a workpiece according to further embodiments, the treatment beam or at least a part of the electromagnetic radiation emanating from the treatment region can be deflected by a dichroitic mirror.

Another embodiment provides a method for beam treatment of a workpiece, in particular for laser beam treatment, in particular using a device for monitoring beam treatment of a workpiece or a device for beam treatment of a workpiece according to any of claims 1-11, which includes the steps of the method of monitoring beam treatment of a workpiece according to any of claims 14-20.

The above embodiments of the method for monitoring beam treatment of a workpiece and of the method for beam treatment of a workpiece allow for the same advantages and effects as mentioned above for the corresponding devices.

Some of the above mentioned embodiments are described in more detail in the following description of typical embodiments with reference to the following drawings in which
- Fig. 1: schematically shows an example of the device for beam treatment according to the present invention;
- Fig. 2: schematically shows video streams produced by the example of Fig. 1;
- Figs. 3a and 3b: illustrate a video frame of the treatment region detected without illumination by the example of Fig. 1;
- Figs. 4a and 4b: illustrate a video frame of the treatment region detected with illumination by the example of Fig. 1; and
- Fig. 5: schematically shows another example of a device for monitoring beam treatment according to the invention.

In the following description of the drawings, the same reference numbers refer to the same components. Generally, only the differences with respect to the individual embodiments are described.

Within embodiments described herein, the terms "providing a plurality of frames" or "provide a frame" can be synonymously replaced by "detecting a plurality of frames" or "detect a frame", respectively. Moreover, the term "within" a time interval used in the description of embodiments may encompass the term "during" the time interval. Modifications of these terms can be interpreted analogously. In some embodiments, the device for beam treatment may be called beam treatment device and the method for beam treatment may be termed beam treatment method.

As mentioned above, a device for monitoring beam treatment of a workpiece, in particular laser beam treatment, according to claim 1 is provided, including at least one illuminating device for illuminating a treatment region of the workpiece during a plurality of first time intervals, the first time intervals being separated from each other by second time intervals during which the treatment region is not illuminated by the illumination device; a detecting device (or alternatively named "detection device") for detecting an electromagnetic radiation emanating from the treatment region; and a processing device for separate processing of the electromagnetic radiation detected within the first time intervals and of the electromagnetic radiation detected within the second time intervals; wherein the detecting device is adapted to detect the electromagnetic radiation by providing a video stream with a plurality of frames at a frame rate, the frames including images of the electromagnetic radiation, the first and the second time intervals being synchronized with the frame rate.

In some embodiments, the processing device may additionally be adapted for synchronization of the illuminating device and of the detecting device, as well as of optional other devices of the device for monitoring beam treatment, such as the filtering device and/or the amplification device of embodiments. The processing device may be connected to the illuminating device, the detecting device, to optional components of the device for monitoring beam treatment, and/or to a beam treatment device, in particular to a beam treatment device of embodiments described herein, via data conducting lines. Thereby, automatic control and feedback control of the beam treatment process can be promoted. For instance, the processing device may be adapted for synchronizing the electronic amplification of the detecting device with the frame rate. Moreover, the processing device may be adapted for synchronizing the exposure time of the detecting device with the frame rate.

According to embodiments, the plurality of first and second time intervals may correspond to time intervals of the beam treatment. Moreover, the second time intervals are arranged or provided between the first time intervals. Further, the plurality of first and second time intervals may be predetermined. For instance, the time intervals can be calculated by the processing device and the illuminating device may be controlled correspondingly. The treatment region may also be understood as beam treatment region.

The electromagnetic radiation can be detected within some of the first and/or second time intervals. However, the electromagnetic radiation may be detected not only within, but also during the entire time durations of the first and second time intervals. Moreover, the electromagnetic radiation can be detected during each of the first and/or second time intervals. These embodiments promote a continuous monitoring of the beam treatment process.

The at least one illuminating device can be adapted to emit electromagnetic radiation in a wavelength range of 200 to 900 nm, preferably in a range of 300 to 850 nm, more preferably in a range of 380 to 820 nm. For example, the illuminating device(s) may be a light source, such as an array of diodes, which may emit light in the mentioned wavelength range. In addition or alternatively, the at least one illuminating device can be configured for homogeneous illumination of the treatment region. This may for instance be achieved by an annular structure of the illuminating device or by an annular arrangement of a plurality of illuminating devices.

As mentioned above, the detecting device is adapted to detect the electromagnetic radiation by providing a plurality of frames of the electromagnetic radiation at a frame rate. The first and the second time intervals produced by the illuminating device are synchronized with the frame rate such that the first and the second time intervals each correspond to the time duration of one or more of the frames. For instance, the first time intervals of illumination may each correspond to the time duration of one frame, whereas the second time intervals may each correspond to the time duration of two frames, and vice versa. Moreover, some or all frames of the plurality of frames may have the same time duration.

Further, the detecting device can include an array of photodiodes, an array of photosensitive elements, and/or a video camera. Moreover, the detecting device may be spatially resolving. The detecting device may thus provide spatially resolved images included in the video frames. Furthermore, the detecting device can be adapted to provide a selectable and/or varying exposure time for taking and/or recording at least a part of the images.

The processing device is adapted to provide a first stream of frames including images of the electromagnetic radiation detected within the first time intervals and a second stream of frames including images of the electromagnetic radiation detected within the second time intervals. Thereby, two separately and/or differently processed streams of frames can be obtained. Thus, the treatment region can be continuously displayed during illumination by combining just the frames of the first time intervals. Moreover, the detected electromagnetic radiation emitted by the workpiece itself during treatment can be continuously displayed without illumination by combining solely the frames of the second time intervals. Furthermore, the first and second streams of frames each allow a monitoring of the detected electromagnetic radiation or of the treatment region, respectively, in real time. Thereby, automatic control and feedback control of the beam treatment device and of the beam treatment process is additionally promoted.

The processing device is adapted to provide the first and the second streams of frames by processing the video stream provided by the detecting device. For instance, the processing device can select some or all of the frames detected within the first time intervals out of the plurality of frames and combine them to result in the first stream of frames. The same holds for the frames detected within the second time intervals, resulting in the second stream of frames. Moreover, the frames detected within the same type of time intervals can be combined directly after detection or after further processing.

According to further embodiments, a filtering device can be arranged between the detecting device and the treatment region, the filtering device being adapted or adaptable to selectively pass electromagnetic radiation within a wavelength range emitted by the illumination device and reflected by the treatment region. For instance, the filtering device may be a band-pass filter. In some examples, the filtering device may be adjustable to be set at the wavelength range emitted by the illumination device(s), e.g. using the processing device.

Moreover, the device for monitoring beam treatment may include an amplification device for amplification of at least a part of the electromagnetic radiation emanating from the treatment region and detected at least within the first time intervals and/or within the second time intervals. The amplification device may be a component of the detection device.

Embodiments of the device for monitoring beam treatment, which encompass the filtering device and/or the amplification device, allows to predominantly detect the treatment region as illuminated by the illumination device(s), in particular during the first time intervals.

The illuminating device and the detecting device are synchronized, e.g. as mentioned above. However, not only the illuminating device and the detecting device to but also the amplification device and/or the filtering device may be synchronized. In particular, the amplification device and/or the filtering device may be controlled to actively amplify and/or filter the electromagnetic radiation exclusively during the first time intervals. For instance, in some examples the varying illumination of the first and the second time intervals as well as the amplification and/or the filtering of the detected electromagnetic radiation can be synchronized with the frame rate of the detecting device. Thus, during the first time intervals representing the time periods in which the workpiece is illuminated by the illumination device(s), and in some embodiments within the first stream of frames of the electromagnetic radiation, it is possible to effectively avoid detection of the electromagnetic radiation which is emitted by the workpiece itself due to the beam treatment.

Moreover, the frames showing the illuminated treatment region may be brighter than the frames of the non-illuminated treatment region. In these cases, the amplification and/or the synchronization can be chosen such that the frames showing the non-illuminated treatment region are amplified more intensely than the frames showing the illuminated treatment region.

According to further examples, during the first time intervals, the illumination can be set and/or synchronized to be brighter than the electromagnetic radiation emitted by the workpiece itself during treatment, such as thermal radiation. This allows a predominant detection of the treatment region as illuminated by the illumination device(s) during the first time intervals. On the other hand, during the second time intervals, i.e. during observation of the treatment region without additional illumination, detection of electromagnetic radiation emitted by the workpiece itself is allowed.

According to embodiments, the device for monitoring beam treatment of a workpiece may have a central axis, and at least one of the at least one illuminating device, the detecting device and the filtering device may be arranged coaxially with the central axis and/or may be formed axially symmetric. Thus, in some embodiments, an axial or coaxial symmetry of one or more components of the device for monitoring beam treatment and/or of the device for beam treatment can be realized. In some examples, the central axis may be arranged in parallel to the beam direction, in particular the beam may be emitted coaxially with the central axis towards the workpiece.

As described above, a further embodiment is directed to a device for beam treatment of a workpiece, in particular for laser beam treatment, including a beam source for beam treatment of the workpiece and a device for monitoring beam treatment according to any of claims 1-8.

The beam source for beam treatment of the workpiece of embodiments of the invention may produce a high-energy beam, e.g. a laser beam or a particle beam, such as electron beam or proton beam. An example of a laser beam source is a fiberlaser, which may provide a laser beam power of 500 W or more, preferably of 4000 W or more, and more preferably of 8000 W or more.

Some examples of the device for beam treatment can include a beam treatment head providing the beam, the device for monitoring beam treatment being an integral component of the beam treatment head. Further, the illumination device(s) may be arranged within or outside the beam treatment head.

Moreover, the device for beam treatment may include a treatment control device which is connected to or includes the processing device of the device for monitoring beam treatment. The treatment control device may be connected to the components and to the beam source of the device for beam treatment via data conducting lines. This configuration allows for on-line and/or real-time observation, automatic control and/or feedback control of the beam treatment device as well as of the beam treatment process. Thereby, autonomous beam treatment machines and autonomous beam treatment processes can be realized.

According to further embodiments, the device for beam treatment and the device for monitoring beam treatment may each have a central axis, and may be arranged coaxially with each other. This allows a compact configuration of the device for beam treatment by arranging the device for monitoring beam treatment within the device for beam treatment. Moreover, the device for beam treatment of a workpiece can additionally include a dichroitic mirror arranged between the detecting device and the treatment region, the dichroitic mirror deflecting the treatment beam or at least a part of the electromagnetic radiation emanating from the treatment region, e.g. towards the detecting device. For instance, the dichroitic mirror may deflect and transmit the treatment beam to the treatment region, and selectively pass electromagnetic radiation reflected or emitted from the treatment region. Thus, in case of a laser beam treatment, the laser beam may be routed via a transport fiber into the device for beam treatment from the side thereof and directed towards the treatment region by deflection at the dichroitic mirror. Alternatively, the laser beam may be centrally routed via the transport fiber into the device for beam treatment, e.g. along the central axis, while the detecting device is positioned at the side thereof. In this example, electromagnetic radiation emanating from the treatment region can be deflected at the dichroitic mirror towards the detecting device, while the treatment beam is passed through the dichroitic mirror.

Also a method for monitoring beam treatment of a workpiece according to claim 14 is provided.

The method of the invention and its embodiments described herein provide for the same advantages as mentioned above for the corresponding devices. The same holds for the embodiments directed to a method for beam treatment.

### Example

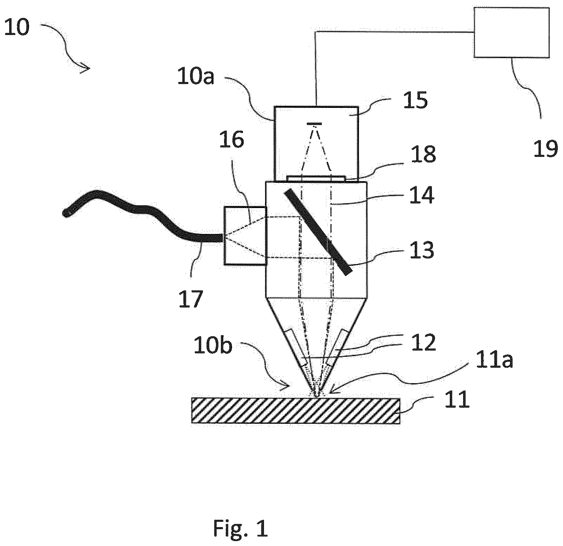

Fig. 1 schematically shows an example of the device for beam treatment. In this example the device for beam treatment includes a beam treatment head 10, and the device for monitoring beam treatment is arranged integrally within the beam treatment head 10. Further components, such as collimating or focusing lenses, which are not shown can be provided.

In the present example, the beam treatment head 10 has a tubular housing 10a including a central axis (not shown). At one end of the beam treatment head, the housing 10a is tapering and has an open tip 10b forming a laser beam outlet. The tip 10b is formed of a nozzle for directing a high pressure gas beam coaxially with the laser beam towards the workpiece, in order to remove molten metal.

Fig. 1 illustrates the beam treatment head 10 positioned near a workpiece 11 of stainless steel. In the arrangement shown by Fig. 1, the tip 10b is directed towards the workpiece 11, thereby defining a treatment region 11a.

Within beam treatment head 10 and near tip 10b two light sources 12 are provided as the illumination devices. In the present example, the two light sources 12 include LEDs emitting pulsed light of a wavelength of about 808 nm.

In one side wall of the housing 10a, the beam treatment head 10 is coupled to a transport fiber 17 for transporting a laser beam. In Fig. 1 the transport fiber is shown at the left side of beam treatment head 10.

The beam treatment head further includes a dichroitic mirror 13, a video camera 15 as the detecting device, and a filter 18 as the filtering device. The dichroitic mirror 13 is provided between the light sources 12 and the filter 18, reflecting light of 1060-1080 nm (>99.9%) below 45° and transmitting light between 400-900 nm (> 50%). The dichroitic mirror 13 is centrally positioned within housing 10a and is inclined with respect to the central axis of the beam treatment head, facing the transport fiber 17. The transport fiber is a common 100 µm step-index fiber. The filter 18 is positioned between the dichroitic mirror 13 and the video camera 15 and is a bandpass filter for selective passage of light of about 808 ± 10 nm. Video camera 15 is configured to provide a stream of spatially resolved video images. Video camera 15 is monochromatic and is in this example set to a spatial resolution of 500 x 500 pixel and a brightness resolution of 8 bit. The video camera 15 is connected to a processing device 19 for evaluating the video stream.

The light sources 12, the video camera 15 and the filter 18 are coaxially arranged with respect to the central axis of the beam treatment head 10.

Optionally, the beam treatment head may include additional optical devices (not shown) between tip 10b and dichroitic mirror 13, as well as between filter 18 and video camera 15, for shaping laser beams or light rays travelling within beam treatment head 10.

During operation of beam treatment head 10, a laser beam 16 of about 1070 nm is fed via transport fiber 17 into the beam treatment head from the side thereof. The laser beam 16 is deflected at dichroitic mirror 13 and routed substantially in parallel to the central axis of the beam treatment head 10 through tip 10a towards treatment region 11a. Since the laser beam 16 cannot pass dichroitic mirror 13, detection of the laser beam is avoided. Within treatment region 11a, material of the workpiece 11 is heated and molten by laser beam 16, emitting a glow and a thermal radiation.

The treatment region 11a is intermittently illuminated by pulsed light sources 12 using light of a wavelength of about 808 nm and 122 Hz, 90 µs pulses. Thereby, the treatment region 11a of the workpiece 11 is homogeneously illuminated during a plurality of first time intervals, the first time intervals being separated from each other by second time intervals during which the treatment region is not illuminated by the illumination sources 12.

During the first time intervals, i.e. during illumination by light sources 12, the illumination light 14 is directed towards the treatment region 11a and is reflected back into the beam treatment head through tip 10b. The illumination light 14 passes dichroitic mirror 13 and filter 18 and finally arrives at video camera 15.

Due to the laser beam treatment, the heated material and the melt produced emits a glow and a thermal radiation which is radiated into the beam treatment head through tip 10b. The resulting electromagnetic radiation encompasses a broad range of wavelengths including the wavelength of about 808 nm. Hence, since filter 18 permits to pass electromagnetic radiation of a wavelength of about 808 nm, not only the illumination light resulting from the workpiece region illuminated by pulsed light sources 12 during the first time intervals, but also a portion of radiation emitted by the workpiece itself during the second time intervals without additional illumination by light sources 12 pass filter 18 and arrive at video camera 15.

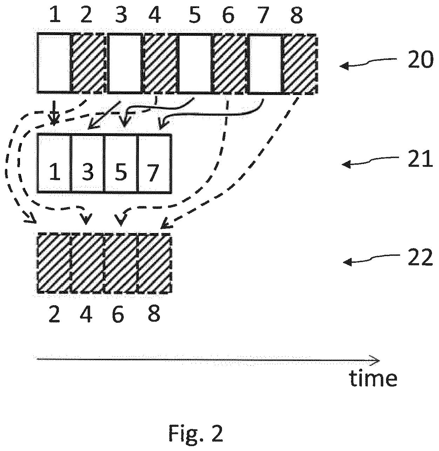

Video camera 15 detects the electromagnetic radiation by providing a plurality of video frames of same time duration at a frame rate. The first and the second time intervals provided by the pulsed light sources 12 are synchronized with the frame rate such that the first and the second time intervals each correspond to the time duration of a single video frame. Thus, video camera 15 produces a stream 20 of video frames 1 to 8 as illustrated in Fig. 2, showing the illuminated and the non-illuminated treatment region 11a in an alternating manner. Hence, every second video frame corresponds to the same type of time interval.

Fig. 2 illustrates how processing device 19 connected to the video camera 15 processes the video frames 1 to 8. Processing device 19 selects the video frames 1, 3, 5, and 7 detected within the first time intervals from the stream 20 of video frames produced by the video camera 15. The processing device 19 combines the video frames 1, 3, 5, and 7 to result in a first stream 21 of video frames, which represents a video film of the illuminated treatment region 11a. The video frames 2, 4, 6, 8 detected within the second time intervals are selected and combined analogously to result in a second stream 22 of video frames, reflecting a video film of the non-illuminated treatment region 11a.

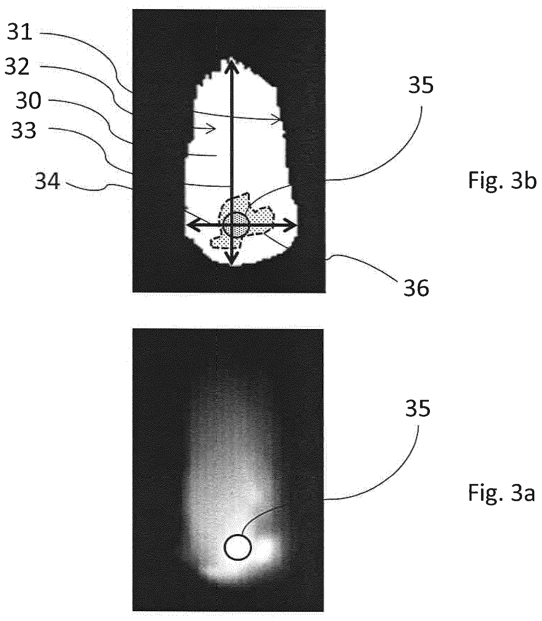

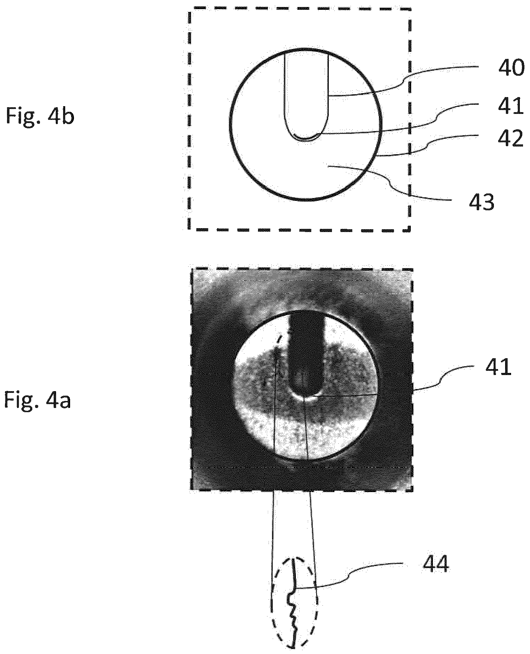

Therefore, the first stream 21 represents the illuminated treatment region 11a, whereas the second stream 22 reflects the treatment region 11a without additional illumination by light sources 12. The first and second streams 21 and 22 provide different information about the treatment region, as will be described below referring to Figs. 3a, 3b and 4a, 4b, which show a fusion cut of 6 mm stainless steel.

Fig. 3a displays one video frame of the treatment region detected during the second time intervals, i.e. without additional illumination. As shown in more detail in Fig. 3b for visualization, the video frame of Fig. 3a reflects a radiation zone 30 having an outer circumference 31 and an area 32. The two straight arrows within radiation zone 30 correspond to the length 33 and the breadth 34 thereof. The circle depicted in Figs. 3a and 3b shows the radiation core area 35 which is enclosed by an irregularly shaped region 36 of highest radiation intensity.

Consequently, the video frame of Fig. 3a inter alia allows observation of the radiation core area; the magnitude and the circumference of the radiation zone; the circularity and the symmetry of the radiation zone at least to the right and/or to the left of the propagation direction of the laser beam; the intensity distribution; the contrast, the length and width (kerf width) of the radiation zone; as well as melt film corrugations.

Fig. 4a shows one video frame of the treatment region detected during the first time intervals, i.e. with additional illumination. Fig. 4b reflects some of the details presented by Fig. 4a for better visualization. Figs. 4a, b illustrate a cutting kerf 40 and its width, the cutting front 41 having a characteristic cutting front inclination, a size of the nozzle opening 42, as well as the structure 43 of the workpiece surrounding the cutting area. The magnified detail indicated in Fig. 4a by an added dashed circle illustrates the detectability of the cutting edge roughness and structure 44.

Consequently, the video frame of Fig. 4a inter alia allows observation of the width of the cutting kerf 40, the symmetry of the cutting kerf 40, the cutting front 41 and its inclination angle, i.e. the cutting front angle, the surface roughness of the cutting edge, e.g. the structure of corrugations, and the structure 43 of the workpiece 11.

Thus, combining the video frames taken by the camera 15 to result in the first and second video streams 21 and 22 as described above allows continuous observation and monitoring of different information about the treatment region.

In the present example, the beam treatment head 10 is part of the device for beam treatment which includes a treatment control device (not shown) connected to the processing device 19. The treatment control device is connected to the components and to the laser source of the device for beam treatment via data conducting lines. Due to the video streams 21 and 22 produced by processing device 19, the present example allows for on-line and/or real-time observation, automatic control and/or feedback control of the device for beam treatment as well as of the beam treatment process. Thereby, not only a high cutting quality can be promoted, but also an autonomous beam treatment device and an autonomous beam treatment process can be realized.

### Further examples

According to the example described above, every second video frame corresponds to the same type of time interval. Thus, the first and the second time intervals are synchronized with the frame rate such that the first and the second time intervals each correspond to the time duration of one video frame. However, in other examples, the first and/or the second time intervals can be synchronized with the frame rate such that the first and/or the second time intervals each correspond to the time duration of more than one video frame.

In yet other examples, video camera 15 of the example described above may include an amplification device. The latter can be set to provide varying amplifications of the filtered electromagnetic radiation emanating from the workpiece region. A suitably chosen amplification during the first time intervals, i.e. during illumination by light sources 12, allows to suppress or eliminate the electromagnetic radiation emitted by the workpiece itself during treatment, such as thermal radiation. Thus, the illuminated treatment region can reliably be observed and monitored. On the other hand, during the second time intervals, i.e. during observation of the treatment region without additional illumination, the amplification may be set to allow detection and monitoring of electromagnetic radiation emitted by the treatment region itself. Hence, also the non-illuminated treatment region can reliably be observed and monitored.

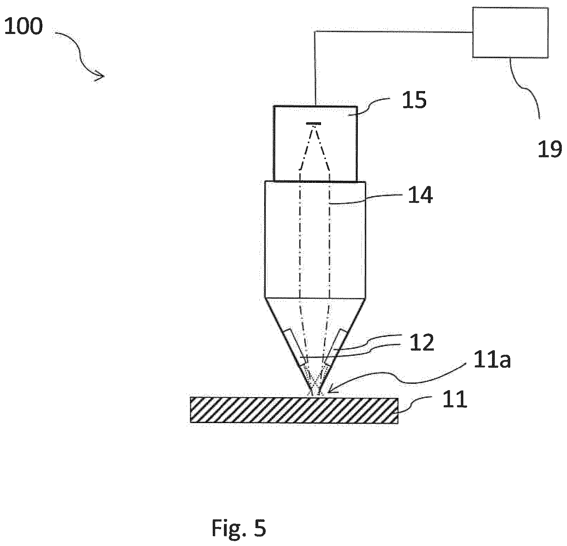

In the example described above with reference to Figs. 1 to 4, the device for beam treatment includes a beam treatment head 10, and the device for monitoring beam treatment is an integral component of the beam treatment head 10. Alternatively, as shown in Fig. 5, the device for monitoring beam treatment can also be configured as a device 100 separate from the beam treatment head. For instance, the light sources 12 and the video camera 15 (and possibly also the filter 18 as visible in Fig. 1) can be combined within a housing which during beam treatment may be positioned laterally to the beam treatment head which provides the beam, in order to observe and monitor the treatment region. This configuration also enables on-line and/or real-time observation, automatic control and/or feedback control of the beam treatment head and of the entire beam treatment device as well as of the beam treatment process.

While the foregoing is directed to examples and embodiments of the invention, other and further embodiments of the invention may be devised. Especially, mutually non-exclusive features of the examples and embodiments described above may be combined with each other.

### List of Reference Signs

- 1 to 8: video frames
- 10: beam treatment head
- 10a: housing
- 10b: tip / nozzle
- 11: workpiece
- 11a: treatment region
- 12: light sources
- 13: dichroitic mirror
- 14: light to be detected / electromagnetic radiation to be detected
- 15: video camera / detecting device
- 16: laser beam / treatment beam
- 17: transport fiber
- 18: filter
- 19: processing device
- 20 to 22: video streams
- 30: radiation zone
- 31: outer circumference of radiation zone
- 32: area of radiation zone
- 33: length of radiation zone
- 34: width of radiation zone
- 35: radiation core area
- 36: region of highest radiation intensity
- 40: cutting edge of the cutting kerf
- 41: cutting front
- 42: size and characteristics of nozzle opening / tip opening
- 43: workpiece structure surrounding the cutting area
- 44: cutting edge roughness and structure
- 100: beam treatment head

## Claims

1. A device for monitoring beam treatment of a workpiece (11), in particular laser beam treatment,
comprising
at least one illuminating device (12) for illuminating a treatment region (11a) of the workpiece (11) during a plurality of first time intervals, the first time intervals being separated from each other by second time intervals during which the treatment region is not illuminated by the illumination device;
a detecting device (15) for detecting an electromagnetic radiation emanating from the treatment region;
and
a processing device (19) for separate processing of the electromagnetic radiation detected within the first time intervals and of the electromagnetic radiation detected within the second time intervals;
wherein the detecting device (15) is adapted to detect the electromagnetic radiation by providing a video stream with a plurality of frames of the electromagnetic radiation at a frame rate, each frame including an image of the electromagnetic radiation, the first and the second time intervals being synchronized with the frame rate;
wherein the processing device (19) is adapted to provide a first stream (21) of frames of the electromagnetic radiation detected within the first time intervals and a second stream (22) of frames of the electromagnetic radiation detected within the second time intervals.

2. The device according to claim 1, wherein the detecting device (15) is adapted to record the detected electromagnetic radiation by providing the video stream.

3. The device according to claim 1 or 2, wherein the processing device (19) is adapted to provide the first and the second streams of frames by processing the video stream provided by the detecting device (15).

4. The device according to any of the preceding claims, wherein a filtering device (18) is arranged between the detecting device (15) and the treatment region, the filtering device being adapted or adaptable to selectively pass electromagnetic radiation within a wavelength range emitted by the illumination device and reflected by the treatment region.

5. The device according to any of the preceding claims, wherein the device for monitoring beam treatment of a workpiece has a central axis, and wherein at least one of the at least one illuminating device (12), the detecting device (15) and the filtering device (18) are arranged coaxially with the central axis and/or are each formed axially symmetric.

6. The device according to any of the preceding claims, wherein the detecting device (15) comprises an array of photodiodes, an array of photosensitive elements, and/or a video camera.

7. The device according to any of the preceding claims, wherein the at least one illuminating device (12) is adapted to emit electromagnetic radiation in a wavelength range of 200 to 900 nm, preferably in a range of 300 to 850 nm, more preferably in a range of 380 to 820 nm and/or is configured for homogeneous illumination of the treatment region.

8. The device according to any of the preceding claims, including an amplification device for amplification of at least a part of the electromagnetic radiation emanating from the treatment region and detected at least within the first time intervals and/or within the second time intervals.

9. A device for beam treatment of a workpiece, in particular for laser beam treatment, comprising a beam source for beam treatment of the workpiece (11) and a device for monitoring beam treatment according to any of the preceding claims.

10. The device according to claim 9, wherein the device for beam treatment and the device for monitoring beam treatment each have a central axis, and are arranged coaxially with each other.

11. The device according to any of claims 9 and 10, comprising a dichroitic mirror (13) arranged between the detecting device (15) and the treatment region, the dichroitic mirror (13) deflecting the treatment beam (16) or at least a part of the electromagnetic radiation emanating from the treatment region.

12. A use of a device according to any of claims 1 to 8 for monitoring laser beam cutting.

13. A use of a device according to any of claims 9 to 11 for laser beam cutting.

14. A method for monitoring beam treatment of a workpiece (11), in particular laser beam treatment, in particular using a device according to any of claims 1 to 11, comprising
illuminating a treatment region of the workpiece during a plurality of first time intervals, the first time intervals being separated from each other by second time intervals during which the treatment region is not illuminated by the illumination device (12); detecting an electromagnetic radiation emanating from the treatment region;
and
separate processing of the electromagnetic radiation detected within the first time intervals and of the electromagnetic radiation detected within the second time intervals;
wherein the detecting provides a video stream with a plurality of frames of the electromagnetic radiation at a frame rate, each frame including an image of the electromagnetic radiation, the first and the second time intervals being synchronized with the frame rate; wherein the separate processing provides a first stream (21) of frames of the electromagnetic radiation detected within the first time intervals and a second stream (22) of frames of the electromagnetic radiation detected within the second time intervals.

15. The method according to claim 14, wherein the detected electromagnetic radiation is recorded by providing the video stream.

16. The method according to claim 14 or 15, wherein the first and the second streams of frames are obtained by processing the video stream provided by the detecting.

17. The method according to any of claims 14 to 16, wherein the electromagnetic radiation emanating from the treatment region is filtered before being detected to selectively pass electromagnetic radiation within a wavelength range emitted by the illumination device (12) and reflected by the treatment region.

18. The method according to any of claims 14 to 17, wherein the treatment region is illuminated using electromagnetic radiation in a wavelength range of 200 to 900 nm, preferably in a range of 300 to 850 nm, more preferably in a range of 380 to 820 nm and/or is homogeneously illuminated.

19. The method according to any of claims 14 to 18, wherein at least a part of the electromagnetic radiation emanating from the treatment region and detected at least within the first time intervals and/or within the second time intervals is amplified.

20. The method according to any of claims 14 to 19, wherein the treatment beam or at least a part of the electromagnetic radiation emanating from the treatment region is deflected by a dichroitic mirror (13).

21. A method for beam treatment of a workpiece, in particular for laser beam treatment, in particular using a device according to any of claims 1 to 11,
comprising the steps of the method according to any of claims 14 to 20.

## Patentansprüche

1. Vorrichtung zur Überwachung der Strahlbehandlung eines Werkstücks (11), insbesondere der Laserstrahlbehandlung,
umfassend
mindestens eine Beleuchtungsvorrichtung (12) zum Beleuchten eines Behandlungsbereichs (11a) des Werkstücks (11) während mehrerer erster Zeitintervalle, wobei die ersten Zeitintervalle durch zweite Zeitintervalle voneinander getrennt sind, während derer der Behandlungsbereich nicht von der Beleuchtungsvorrichtung beleuchtet ist;
eine Erfassungsvorrichtung (15) zum Erfassen einer von dem Behandlungsbereich ausgehenden elektromagnetischen Strahlung;
und
eine Verarbeitungsvorrichtung (19) zum getrennten Verarbeiten der innerhalb der ersten Zeitintervalle erfassten elektromagnetischen Strahlung und der innerhalb der zweiten Zeitintervalle erfassten elektromagnetischen Strahlung;
wobei die Erfassungsvorrichtung (15) geeignet ist, die elektromagnetische Strahlung zu erfassen, indem sie einen Videostream mit einer Vielzahl von Frames der elektromagnetischen Strahlung mit einer Framerate bereitstellt, wobei jeder Frame ein Bild der elektromagnetischen Strahlung einschließt, wobei das erste und das zweite Zeitintervall mit der Framerate synchronisiert werden;
wobei die Verarbeitungsvorrichtung (19) geeignet ist, um einen ersten Stream (21) von Frames der innerhalb der ersten Zeitintervalle erfassten elektromagnetischen Strahlung und einen zweiten Stream (22) von Frames der innerhalb der zweiten Zeitintervalle erfassten elektromagnetischen Strahlung bereitzustellen.

2. Vorrichtung nach Anspruch 1, wobei die Erfassungsvorrichtung (15) geeignet ist, um die erfasste elektromagnetische Strahlung durch Bereitstellen des Videostreams aufzuzeichnen.

3. Vorrichtung nach Anspruch 1 oder 2, wobei die Verarbeitungsvorrichtung (19) geeignet ist, um den ersten und den zweiten Frame-Stream bereitzustellen, indem der von der Erfassungsvorrichtung (15) bereitgestellte Videostream verarbeitet wird.

4. Vorrichtung nach einem der vorhergehenden Ansprüche, wobei zwischen der Erfassungsvorrichtung (15) und dem Behandlungsbereich eine Filtervorrichtung (18) angeordnet ist, wobei die Filtervorrichtung geeignet oder anpassbar ist, elektromagnetische Strahlung innerhalb eines Wellenlängenbereichs, die von der Beleuchtungsvorrichtung emittiert und von dem Behandlungsbereich reflektiert wird, selektiv durchzulassen.

5. Vorrichtung nach einem der vorhergehenden Ansprüche, wobei die Vorrichtung zum Überwachen der Strahlbehandlung eines Werkstücks eine Mittelachse aufweist und wobei mindestens eine von der mindestens einen Beleuchtungsvorrichtung (12), der Erfassungsvorrichtung (15) und der Filtervorrichtung (18) koaxial zur Mittelachse angeordnet und/oder jeweils achssymmetrisch ausgebildet sind.

6. Vorrichtung nach einem der vorhergehenden Ansprüche, wobei die Erfassungsvorrichtung (15) ein Array von Photodioden, ein Array von lichtempfindlichen Elementen und/oder eine Videokamera umfasst.

7. Vorrichtung nach einem der vorhergehenden Ansprüche, wobei die mindestens eine Beleuchtungsvorrichtung (12) dazu geeignet ist, elektromagnetische Strahlung in einem Wellenlängenbereich von 200 bis 900 nm, vorzugsweise in einem Bereich von 300 bis 850 nm, besonders bevorzugt in einem Bereich von 380 bis 820 nm zu emittieren und/oder für eine homogene Beleuchtung des Behandlungsbereichs konfiguriert ist.

8. Vorrichtung nach einem der vorhergehenden Ansprüche, einschließend eine Verstärkungsvorrichtung zur Verstärkung mindestens eines Teils der elektromagnetischen Strahlung, die von dem Behandlungsbereich ausgeht und mindestens innerhalb der ersten Zeitintervalle und/oder innerhalb der zweiten Zeitintervalle erfasst wird.

9. Vorrichtung zur Strahlbehandlung eines Werkstücks, insbesondere zur Laserstrahlbehandlung, umfassend eine Strahlquelle zur Strahlbehandlung des Werkstücks (11) und eine Vorrichtung zur Überwachung der Strahlbehandlung nach einem der vorhergehenden Ansprüche.

10. Vorrichtung nach Anspruch 9, wobei die Vorrichtung zur Strahlbehandlung und die Vorrichtung zur Überwachung der Strahlbehandlung jeweils eine Mittelachse aufweisen und koaxial zueinander angeordnet sind.

11. Vorrichtung nach einem der Ansprüche 9 und 10, umfassend einen dichroitischen Spiegel (13), der zwischen der Erfassungsvorrichtung (15) und dem Behandlungsbereich angeordnet ist, wobei der dichroitische Spiegel (13) den Behandlungsstrahl (16) oder mindestens einen Teil von der von dem Behandlungsbereich ausgehenden elektromagnetischen Strahlung ablenkt.

12. Verwendung einer Vorrichtung nach einem der Ansprüche 1 bis 8 zur Überwachung des Laserstrahlschneidens.

13. Verwendung einer Vorrichtung nach einem der Ansprüche 9 bis 11 zum Laserstrahlschneiden.

14. Verfahren zur Überwachung der Strahlbehandlung eines Werkstücks (11), insbesondere Laserstrahlbehandlung, insbesondere unter Verwendung einer Vorrichtung nach einem der Ansprüche 1 bis 11, umfassend
Beleuchten eines Behandlungsbereichs des Werkstücks während mehrerer erster Zeitintervalle, wobei die ersten Zeitintervalle durch zweite Zeitintervalle voneinander getrennt sind, während derer der Behandlungsbereich nicht durch die Beleuchtungsvorrichtung (12) beleuchtet wird; Erfassen einer elektromagnetischen Strahlung, die von dem Behandlungsbereich ausgeht;
und
getrennte Verarbeitung der innerhalb der ersten Zeitintervalle erfassten elektromagnetischen Strahlung und der innerhalb der zweiten Zeitintervalle erfassten elektromagnetischen Strahlung;
wobei das Erfassen einen Videostream mit mehreren Frames der elektromagnetischen Strahlung mit einer Framerate bereitstellt, wobei jeder Frame ein Bild der elektromagnetischen Strahlung einschließt, wobei das erste und das zweite Zeitintervall mit der Framerate synchronisiert sind; wobei die getrennte Verarbeitung einen ersten Stream (21) von Frames der innerhalb der ersten Zeitintervalle erfassten elektromagnetischen Strahlung und einen zweiten Stream (22) von Frames der innerhalb der zweiten Zeitintervalle erfassten elektromagnetischen Strahlung bereitstellt.

15. Verfahren nach Anspruch 14, wobei die erfasste elektromagnetische Strahlung durch Bereitstellen des Videostreams aufgezeichnet wird.

16. Verfahren nach Anspruch 14 oder 15, wobei der erste und der zweite Framestream durch Verarbeiten des durch das Erfassen bereitgestellten Videostreams erhalten werden.

17. Verfahren nach einem der Ansprüche 14 bis 16, wobei die von dem Behandlungsbereich ausgehende elektromagnetische Strahlung gefiltert wird, bevor sie erfasst wird, um selektiv elektromagnetische Strahlung innerhalb eines Wellenlängenbereichs durchzulassen, der von der Beleuchtungsvorrichtung (12) emittiert und von dem Behandlungsbereich reflektiert wird.

18. Verfahren nach einem der Ansprüche 14 bis 17, wobei der Behandlungsbereich mit elektromagnetischer Strahlung in einem Wellenlängenbereich von 200 bis 900 nm, vorzugsweise in einem Bereich von 300 bis 850 nm, besonders bevorzugt in einem Bereich von 380 bis 820 nm beleuchtet wird und/oder homogen beleuchtet wird.

19. Verfahren nach einem der Ansprüche 14 bis 18, wobei mindestens ein Teil der elektromagnetischen Strahlung, die von dem Behandlungsbereich ausgeht und mindestens innerhalb der ersten Zeitintervalle und/oder innerhalb der zweiten Zeitintervalle erfasst wird, verstärkt wird.

20. Verfahren nach einem der Ansprüche 14 bis 19, wobei der Behandlungsstrahl oder mindestens ein Teil der von dem Behandlungsbereich ausgehenden elektromagnetischen Strahlung durch einen dichroitischen Spiegel (13) abgelenkt wird.

21. Verfahren zur Strahlbehandlung eines Werkstücks, insbesondere zur Laserstrahlbehandlung, insbesondere unter Verwendung einer Vorrichtung nach einem der Ansprüche 1 bis 11,
umfassend die Schritte des Verfahrens nach einem der Ansprüche 14 bis 20.

## Revendications

1. Dispositif permettant de surveiller un traitement par faisceau d'une pièce à travailler (11), en particulier un traitement par faisceau laser,
comprenant
au moins un dispositif d'éclairage (12) pour éclairer une zone de traitement (11a) de la pièce à travailler (11) pendant plusieurs premiers intervalles de temps, les premiers intervalles de temps étant séparés les uns des autres par des seconds intervalles de temps pendant lesquels la zone de traitement n'est pas éclairée par le dispositif d'éclairage ; un dispositif de détection (15) pour détecter un rayonnement électromagnétique émanant de la zone de traitement ;
et
un dispositif de traitement (19) pour un traitement séparé du rayonnement électromagnétique détecté dans les premiers intervalles de temps et du rayonnement électromagnétique détecté dans les seconds intervalles de temps ;
dans lequel le dispositif de détection (15) est adapté pour détecter le rayonnement électromagnétique en fournissant un flux vidéo avec une pluralité de trames du rayonnement électromagnétique à une fréquence de trame, chaque trame comprenant une image du rayonnement électromagnétique, les premiers et seconds intervalles de temps étant synchronisés avec la fréquence de trame ;
dans lequel le dispositif de traitement (19) est adapté pour fournir un premier flux (21) de trames du rayonnement électromagnétique détecté dans les premiers intervalles de temps et un second flux (22) de trames du rayonnement électromagnétique détecté dans les seconds intervalles de temps.

2. Dispositif selon la revendication 1, dans lequel le dispositif de détection (15) est adapté pour enregistrer le rayonnement électromagnétique détecté en fournissant le flux vidéo.

3. Dispositif selon la revendication 1 ou 2, dans lequel le dispositif de traitement (19) est adapté pour fournir le premier et le second flux de trames en traitant le flux vidéo fourni par le dispositif de détection (15).

4. Dispositif selon l'une quelconque des revendications précédentes, dans lequel un dispositif de filtrage (18) est agencé entre le dispositif de détection (15) et la zone de traitement, le dispositif de filtrage étant adapté ou adaptable pour laisser passer sélectivement un rayonnement électromagnétique dans une plage de longueurs d'onde émises par le dispositif d'éclairage et réfléchies par la zone de traitement.

5. Dispositif selon l'une quelconque des revendications précédentes, dans lequel le dispositif permettant de surveiller un traitement par faisceau d'une pièce à travailler a un axe central et dans lequel au moins un dispositif parmi au moins un dispositif d'éclairage (12), le dispositif de détection (15) et le dispositif de filtrage (18) est agencé coaxialement à l'axe central et/ou est chacun réalisé avec une symétrie axiale.

6. Dispositif selon l'une quelconque des revendications précédentes, dans lequel le dispositif de détection (15) comprend un réseau de photodiodes, un réseau d'éléments photosensibles et/ou une caméra vidéo.

7. Dispositif selon l'une quelconque des revendications précédentes, dans lequel le au moins un dispositif d'éclairage (12) est adapté pour émettre un rayonnement électromagnétique dans une plage de longueurs d'onde de 200 nm à 900 nm, de préférence dans une plage de 300 nm à 850 nm, plus préférablement dans une plage de 380 nm à 820 nm et/ou est configuré pour un éclairage homogène de la zone de traitement.

8. Dispositif selon l'une quelconque des revendications précédentes, comprenant un dispositif d'amplification pour l'amplification d'au moins une partie du rayonnement électromagnétique émanant de la zone de traitement et détectée au moins dans les premiers intervalles de temps et/ou dans les seconds intervalles de temps.

9. Dispositif de traitement par faisceau d'une pièce à travailler, en particulier pour le traitement par faisceau laser, comprenant une source de faisceau pour le traitement par faisceau de la pièce à travailler (11) et un dispositif permettant de surveiller un traitement par faisceau selon l'une quelconque des revendications précédentes.

10. Dispositif selon la revendication 9, dans lequel le dispositif de traitement par faisceau et le dispositif permettant de surveiller un traitement par faisceau ont chacun un axe central et sont agencés coaxialement l'un à l'autre.

11. Dispositif selon l'une quelconque des revendications 9 et 10, comprenant un miroir dichroïtique (13) agencé entre le dispositif de détection (15) et la zone de traitement, le miroir dichroïtique (13) déviant le faisceau de traitement (16) ou au moins une partie du rayonnement électromagnétique émanant de la zone de traitement.

12. Utilisation d'un dispositif selon l'une quelconque des revendications 1 à 8 pour surveiller une découpe par faisceau laser.

13. Utilisation d'un dispositif selon l'une quelconque des revendications 9 à 11 pour une découpe par faisceau laser.

14. Procédé permettant de surveiller un traitement par faisceau d'une pièce à travailler (11), en particulier un traitement par faisceau laser, en particulier à l'aide d'un dispositif selon l'une quelconque des revendications 1 à 11, comprenant
l'éclairage d'une zone de traitement de la pièce à travailler pendant une pluralité de premiers intervalles de temps, les premiers intervalles de temps étant séparés les uns des autres par des seconds intervalles de temps pendant lesquels la zone de traitement n'est pas éclairée par le dispositif d'éclairage (12) ; la détection d'un rayonnement électromagnétique émanant de la zone de traitement ;
et
le traitement séparé du rayonnement électromagnétique détecté dans les premiers intervalles de temps et du rayonnement électromagnétique détecté dans les seconds intervalles de temps ;
dans lequel la détection fournit un flux vidéo avec une pluralité de trames du rayonnement électromagnétique à une fréquence de trame, chaque trame comprenant une image du rayonnement électromagnétique, les premiers et seconds intervalles de temps étant synchronisés avec la fréquence de trame ; dans lequel le traitement séparé fournit un premier flux (21) de trames du rayonnement électromagnétique détecté dans les premiers intervalles de temps et un second flux (22) de trames du rayonnement électromagnétique détecté dans les seconds intervalles de temps.

15. Procédé selon la revendication 14, dans lequel le rayonnement électromagnétique détecté est enregistré en fournissant le flux vidéo.

16. Procédé selon la revendication 14 ou 15, dans lequel les premier et second flux de trames sont obtenus en traitant le flux vidéo fourni par la détection.

17. Procédé selon l'une quelconque des revendications 14 à 16, dans lequel le rayonnement électromagnétique émanant de la zone de traitement est filtré avant d'être détecté pour laisser passer sélectivement un rayonnement électromagnétique dans une plage de longueurs d'onde émises par le dispositif d'éclairage (12) et réfléchies par la zone de traitement.

18. Procédé selon l'une quelconque des revendications 14 à 17, dans lequel la zone de traitement est éclairée à l'aide d'un rayonnement électromagnétique dans une plage de longueurs d'onde de 200 nm à 900 nm, de préférence dans une plage de 300 nm à 850 nm, plus préférablement dans une plage de 380 nm à 820 nm et/ou est éclairée de manière homogène.

19. Procédé selon l'une quelconque des revendications 14 à 18, dans lequel au moins une partie du rayonnement électromagnétique émanant de la zone de traitement et détecté au moins dans les premiers intervalles de temps et/ou dans les seconds intervalles de temps est amplifiée.

20. Procédé selon l'une quelconque des revendications 14 à 19, dans lequel le faisceau de traitement ou au moins une partie du rayonnement électromagnétique émanant de la zone de traitement est dévié par un miroir dichroïtique (13).

21. Procédé de traitement par faisceau d'une pièce à travailler, en particulier de traitement par faisceau laser, en particulier à l'aide d'un dispositif selon l'une quelconque des revendications 1 à 11,
comprenant les étapes du procédé selon l'une quelconque des revendications 14 à 20.
